# EUROPÄISCHE PATENTSCHRIFT

(11) **EP 2 675 613 B1**
(45) Veröffentlichungstag und Bekanntmachung des Hinweises auf die Patenterteilung: **26.10.2016**
(21) Anmeldenummer: 11805805.6
(22) Anmeldetag: 13.12.2011
(51) Int. Cl.: B29D 30/22, B29D 30/70, B60C 9/18, B60C 9/20

(54) **VERFAHREN ZUR HERSTELLUNG EINES FAHRZEUGLUFTREIFENS**
PROCESS FOR PRODUCING A PNEUMATIC TIRE FOR VEHICLES
PROCEDE POUR LA FABRICATION D'UN PNEUMATIQUE DE VÉHICULE

(30) Priorität: 14.02.2011 DE 102011000703
(43) Veröffentlichungstag der Anmeldung: 25.12.2013
(73) Patentinhaber: Continental Reifen Deutschland GmbH, 30165 Hannover (DE)
(72) Erfinder: BECKER, Theresia, 40625 Düsseldorf (DE)
(74) Vertreter: Preusser, Andrea
(86) Internationale Anmeldenummer: PCT/EP2011/072523
(87) Internationale Veröffentlichungsnummer: WO 2012/110139

(56) Entgegenhaltungen:
- EP-A1- 1 902 867
- EP-A2- 1 213 159
- JP-A- 2011 016 337

## Beschreibung

Die Erfindung betrifft ein Verfahren zur Herstellung eines Fahrzeugluftreifens mit einem Gürtel, bei dem mindestens eine Gürtellage aus parallelen in Kautschuk eingebetteten Stahlkorden ausgebildet wird, wobei die Gürtellage zur Herstellung des Reifenrohlings auf einer Aufbautrommel aufgebaut wird, wobei nach Fertigstellung des Reifenrohlings der Reifenrohling in einer Vulkanisationspresse ausgeformt und vulkanisiert wird.

Fahrzeugluftreifen für Nutzfahrzeuge sind bekannt, bei denen der Gürtel aus vier in radialer Richtung übereinander angeordneten Gürtellagen ausgebildet ist, von denen zwei Gürtellagen als Arbeitslagen ausgebildet sind, deren Festigkeitsträger in ihrem Verlauf jeweils unter Einschluss eines Winkels von 15° bis 24° zur Umfangsrichtung des Fahrzeugreifens ausgerichtet sind. Die Festigkeitsträger der einen Arbeitslage weisen dabei eine entgegengesetzte axiale Neigungsrichtung zu den Festigkeitsträgern der anderen Arbeitslage auf. Die beiden Arbeitslagen bilden hierdurch einen Kreuzverband. Der Gürtel weist darüber hinaus üblicher Weise unterhalb der Arbeitslagen eine als Sperrlage ausgebildete Gürtellage auf, deren Festigkeitsträger in ihrem Verlauf einen Winkel von 45° bis 70° zur Umfangsrichtung einschließen. Darüber hinaus ist als vierte Lage üblicher Weise radial oberhalb der beiden Arbeitslagen eine zusätzliche Schutzlage ausgebildet, deren Festigkeitsträger in ihrem Verlauf einen Winkel von 15° bis 24° zur Umfangsrichtung einschließen. Die Festigkeitsträger dieser Gürtellagen sind Stahlcorde.

Üblicherweise werden derartige Fahrzeugluftreifen derart hergestellt, dass die Gürtellage aus parallelen in Kautschuk eingebetteten Stahlkorden ausgebildet werden, wobei die Gürtellagen zur Herstellung des Reifenrohlings auf einer Aufbautrommel aufgebaut werden. Der um den Laufstreifen ergänzte Gürtel wird mir der torusförmigen Karkasse verbunden. Nach Fertigstellung des vollständigen Reifenrohlings wird der Reifenrohling in einer Vulkanisationspresse ausgeformt und vulkanisiert.

Es ist wünschenswert, dass im Fahrzeugluftreifen Arbeitslagen mit im Wesentlichen undehnbaren Festigkeitsträgern ausgebildet sind. Dies bewirkt eine hohe Umfangssteifigkeit des Gürtels, was sich positiv auf den Abrieb des Reifens sowie auf die Dauerhaltbarkeit auswirkt. Zur Herstellung derartiger Fahrzeugluftreifen werden hierzu die Arbeitslagen mit im Wesentlichen undehnbaren, in Kautschuk eingebetteten Stahlkorden auf die Aufbautrommel aufgelegt. Die fehlende Dehnbarkeit der Stahlkorde wirkt jedoch dann in der Vulkanisationspresse der für die Ausformung wichtigen Resterhebung des Reifens entgegen. Im hergestellten Fahrzeugluftreifen können noch von der Resterhebung resultierende unerwünschte Restspannungen im Stahlkord, zwischen Stahlkordes und Gummimaterial und im Gummimaterial entlang des Stahlkordes verbleiben. Um daraus resultierende Nachteile - wie Überbelastung des Gummimaterials - zu vermeiden oder anderweitig auszugleichen, ist zusätzlicher Aufwand erforderlich. Bei einer derartigen Ausbildung der Fahrzeugluftreifen wird somit die Herstellung der Fahrzeugluftreifen erschwert. Es bedarf zusätzlichen Aufwandes zur Ausformung, zum Ausgleich von Restspannungen oder einer unerwünschten Einschränkung der Ausbildung der Gürtellagen hinsichtlich der Verwendung von undehnbaren Stahlkorden. Dies reduziert jedoch die erreichbare Umfangssteifigkeit des Gürtels und begrenzt die Optimierungsmöglichkeit des Abriebes des Reifens.

Aus der EP 1 902 867 A1 ist ein Verfahren zur Herstellung eines Fahrzeugluftreifens mit einem Gürtel, bei dem mindestens eine Gürtellage aus parallelen in Kautschuk eingebetteten Stahlkorden ausgebildet wird, bekannt, wobei die Gürtellage zur Herstellung des Reifenrohlings auf einer Aufbautrommel aufgebaut wird, wobei nach Fertigstellung des Reifenrohlings der Reifenrohling in eine Vulkanisationspresse ausgeformt und vulkanisiert wird.

Der Erfindung liegt die Aufgabe zugrunde in einfacher Weise eine gute Herstellbarkeit von Fahrzeugluftreifen mit einer hohen Dauerhaltbarkeit und gutem Abrieb zu ermöglichen.

Die Aufgabe wird erfindungsgemäß durch das Verfahren zur Herstellung eines Fahrzeugluftreifens mit einem Gürtel, bei dem mindestens eine Gürtellage aus parallelen in Kautschuk eingebetteten Stahlkorden ausgebildet wird, wobei die Gürtellage zur Herstellung des Reifenrohlings auf einer Aufbautrommel aufgebaut wird, wobei nach Fertigstellung des Reifenrohlings der Reifenrohling in einer Vulkanisationspresse ausgeformt und vulkanisiert wird, gemäß den Merkmalen von Anspruch 1 gelöst, bei dem auf die Aufbautrommel zum Aufbau des Gürtels eine Gürtellage aus parallelen in Kautschuk eingebetteten dehnbaren Stahlkorden aufgelegt wird, und bei dem nach Fertigstellung des Reifenrohlings beim Ausformen und Vulkanisieren des Reifenrohlings in einer Vulkanisationspresse die Stahlkorde in ihrer Dehnbarkeit zu weniger dehnbaren Stahlkorden - insbesondere zu undehnbaren Stahlkorden - verändert werden.

Durch dieses Verfahren wird ermöglicht, die herkömmliche Reifenherstellung beizubehalten, bei der die Gürtellagen auf einer Aufbautrommel aufgebaut werden, und bei der der fertiggestellte Reifenrohling nach seiner Fertigstellung in einer Vulkanisationspresse unter einer Resterhebung ausgeformt und ausvulkanisiert wird. Gleichzeitig wird ermöglicht, dass in fertigen Fahrzeugluftreifen Gürtellagen mit geringer Dehnbarkeit der Stahlkorde ausgebildet sind, wodurch eine sehr hohe Umfangssteifigkeit der Gürtellagen im Fahrzeugluftreifen ermöglicht wird. Hierdurch können Nutzfahrzeugluftreifen mit Arbeitslagen ausgebildet werden, die eine hohe Umfangssteifigkeit im fertigen Reifen aufweisen. Dauerhaltbarkeit und Abrieb können auf einem sehr guten Niveau eingestellt werden. Durch den Aufbau des Gürtels auf der Aufbautrommel mit dehnbaren Stahlkorden kann ohne Änderung des Herstellungsverfahrens, ohne zusätzliche Maßnahmen zur Ermöglichung der Resterhebung in der Vulkanisiationspresse und unter Nutzung der gewünschten, herkömmlichen Resterhebung in herkömmlichen Vulkanisationspressen der Reifen im Wesentlichen spannungsfrei ausgeformt und vulkanisiert werden. Unerwünschte, verbleibende Restspannungen in Stahlkorden der Gürtellagen, zwischen Stahlkorden und Gummimaterial sowie in dem die Stahlkorde umgebenden Gummimaterial längs der Stahlkorde im fertigen Reifen können vermieden werden. Somit kann in einfacher Weise die Herstellung von Fahrzeugluftreifen mit einer hohen Dauerhaltbarkeit und gutem Abrieb ermöglicht werden.

Besonders vorteilhaft ist die das Verfahren zur Herstellung eines Fahrzeugluftreifens gemäß den Merkmalen von Anspruch 2, wobei auf die Aufbautrommel zum Aufbau des Gürtels eine Gürtellage aus parallelen in Kautschuk eingebetteten offenen Stahlkorden aufgelegt wird. Offene Stahlkorde sind Stahlkorde, bei denen die Filamente des Stahlkords im Stahlkord keinen direkten Kontakt zueinander aufweisen. Hierdurch kann der Stahlkord während des weiteren Prozesses durch Schließen versteift werden.

Besonders vorteilhaft ist das Verfahren zur Herstellung eines Fahrzeugluftreifens gemäß den Merkmalen von Anspruch 3, wobei nach Fertigstellung des Reifenrohlings beim Ausformen und Vulkanisieren des Reifenrohlings in einer Vulkanisationspresse die Stahlkorde weiter geschlossen werden und insbesondere zu geschlossenen Stahlkorden verändert werden.

Besonders vorteilhaft ist die das Verfahren zur Herstellung eines Fahrzeugluftreifens gemäß den Merkmalen von Anspruch 4, wobei auf die Aufbautrommel zum Aufbau des Gürtels eine Gürtellage aus parallelen in Kautschuk eingebetteten Stahlkorden mit einer durch Zugkräfte veränderbaren Verdrillung mit einer maximalen Schlaglänge der Stahlkorde von 10mm aufgelegt wird. Dies ermöglicht eine Erhöhung der Schlaglänge im weitem Herstellprozess und hierdurch eine Erhöhung der Steifigkeit der Stahlkorde im Gürtel.

Besonders vorteilhaft ist die das Verfahren zur Herstellung eines Fahrzeugluftreifens gemäß den Merkmalen von Anspruch 5, wobei nach Fertigstellung des Reifenrohlings beim Ausformen und Vulkanisieren des Reifenrohlings in einer Vulkanisationspresse die Stahlkorde in ihrer Schlaglänge erhöht werden.

Besonders vorteilhaft ist das Verfahren zur Herstellung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus mehreren von radial innen nach radial außen auf einander liegend angeordneten Gürtellagen ausgebildet ist, von denen wenigstens zwei Gürtellagen als Arbeitslagen ausgebildet sind, wobei die radial innere und die radial äußere der beiden Arbeitslagen Gürtellagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°<α<24°und die Festigkeitsträger der radial äußeren Arbeitslage einen Winkel γ zur Umfangsrichtung U mit 10°≤γ≤24°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage aufweisen, gemäß den Merkmalen von Anspruch 6, wobei wenigstens eine - insbesondere beide - Arbeitslagen auf die Aufbautrommel zum Aufbau des Gürtels aus parallelen in Kautschuk eingebetteten dehnbaren Stahlkorden aufgelegt wird, und wobei nach Fertigstellung des Reifenrohlings beim Ausformen und Vulkanisieren des Reifenrohlings in einer Vulkanisationspresse die Stahlkorde der Arbeitslage(n) in ihrer Dehnbarkeit zu weniger dehnbaren Stahlkorden - insbesondere zu undehnbaren Stahlkorden - verändert werden. Hierdurch kann die Spannung im Gummimaterial um die Stahlkorde reduziert, aber die Steifigkeit der Stahlkorde selbst nach Vulkanisation erhöht werden. Hierdurch kann das Abriebverhalten des Reifens weiter positiv beeinflusst werden.

Besonders vorteilhaft ist die das Verfahren zur Herstellung eines Fahrzeugluftreifens gemäß den Merkmalen von Anspruch 7, wobei zwischen den beiden Arbeitslagen eine Nullgradlage aufgebaut wird.

Die Erfindung wird im Folgenden an Hand der in den Fig. 1 bis Fig.7 dargestellten Ausführungsbeispiele eines Nutzfahrzeugluftreifens radialer Bauart erläutert. Darin zeigen
- Fig. 1 die: Querschnittsdarstellung eines Fahrzeugluftreifens für Nutzfahrzeuge radialer Bauart,
- Fig.2 eine: Draufsicht auf den Gürtel von Fig. 1 gemäß Schnitt II - II von Fig.1, bei der
- zur: Vereinfachung alle anderen Bauteile des Reifens nicht dargestellt sind,
- Fig.3 eine: ausschnittsweise Querschnittsdarstellung eines Fahrzeugluftreifens analog
- zur: Darstellung von Fig. 1 mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind,
- Fig.5 eine: ausschnittsweise Querschnittsdarstellung eines Fahrzeugluftreifens analog
- zur: Darstellung von Fig. 1 mit weiterer alternativer Ausbildung des Gürtels,

- Fig.6: Draufsicht auf den Gürtel von Fig.5 gemäß Schnitt VI - VI von Fig.5, bei der zur Vereinfachung alle anderen Bauteile des Reifens nicht dargestellt sind,
- Fig.7: schematischen Darstellung zur Erläuterung der Herstellung des Fahrzeugluftreifens in den verschiedene Verfahrensschritte darstellenden Figuren 7a bis 7d.

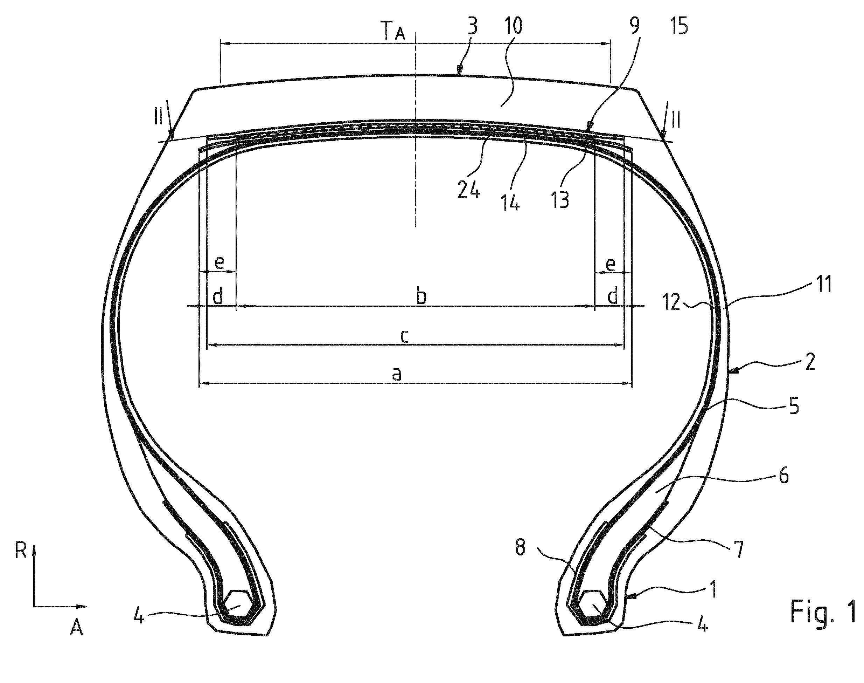

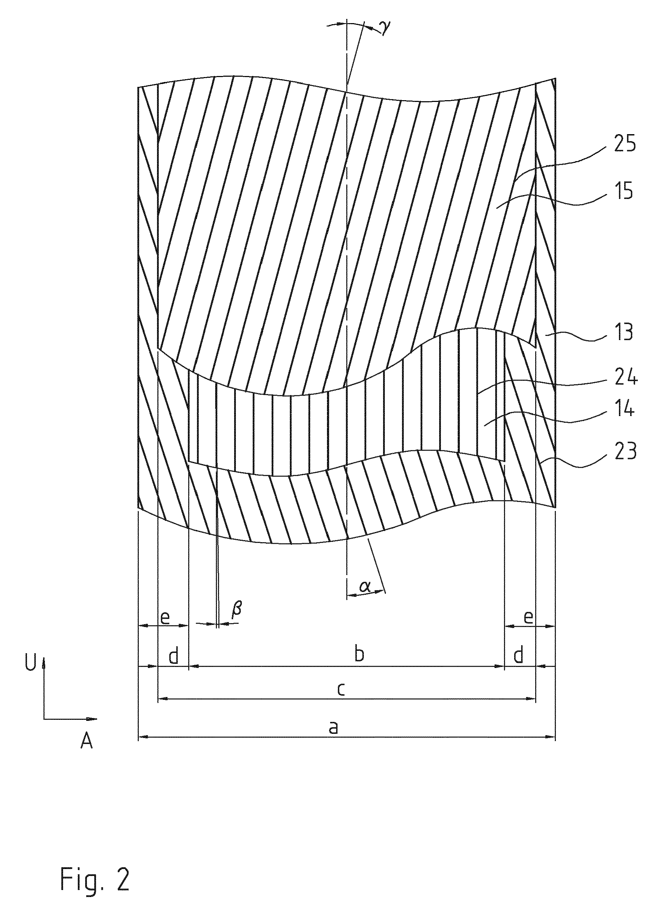

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 7. Die Karkasse 5 ist in bekannter nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Material streifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus drei in radialer Richtung R übereinander und aufeinanderliegend angeordneten Gürtellagen 13, 14 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die radial innere Gürtellage 13 und die radial äußere Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 24°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤24°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet. Die zwischen den beiden Arbeitslagen 15 und 13 ausgebildete dritte Gürtellage 14 erstreckt sich in Umfangsrichtung U über den gesamten Umfang des Fahrzeugluftreifens und in axialer Richtung von linker Reifenschulter zur rechten Reifenschulter und ist als 0°-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind. Alle drei Gürtellagen 13, 14 und 15 erstrecken sich zu beiden axialen Seiten jeweils bis in eine Position in der jeweiligen Reifenschulter, die axial außerhalb der Bodenaufstandsfläche - dargestellt durch die axiale Breite Tₐ der Bodenaufstandsfläche, liegt. Die Gürtellage 14 ist über ihre gesamte axiale Erstreckung in direktem Berührkontakt sowohl zu der unter ihr angeordneten Arbeitslage 13 als auch zu der über ihr angeordneten Arbeitslage 15.

Die 0°-Lage 14 erstreckt sich in axialer Richtung A über eine axiale Breite b, die untere Arbeitslage 13 erstreckt sich in axialer Richtung A über eine axiale Breite a und die obere Arbeitslage 15 erstreckt sich in axialer Richtung A über eine axiale Breite c im Reifen mit a > c > b. Dabei erstreckt sich zu beiden axialen Seiten der 0°-Lage 14 die innere Arbeitslage 13 um eine axiale Erstreckungslänge e über die axiale Position des jeweiligen Gürtelrandes der 0°-Lage 14 hinaus. Ebenso erstreckt sich die äußere Arbeitslage 15 in beide axiale Richtungen jeweils um eine axiale Erstreckungslänge d über die axiale Position des jeweiligen Gürtelrandes der 0°-Lage 14 hinaus. Für die Erstreckungslängen e und d dieses Überhangs gilt e > d. Das Maß d ist dabei mit d ≤ 10 mm ausgebildet. Das Maß e ist im Ausführungsbeispiel mit e ≤ 60 mm ausgebildet. Auch im Bereich des Überhangs berühren sich die beiden Arbeitslagen 13 und 15 nicht.

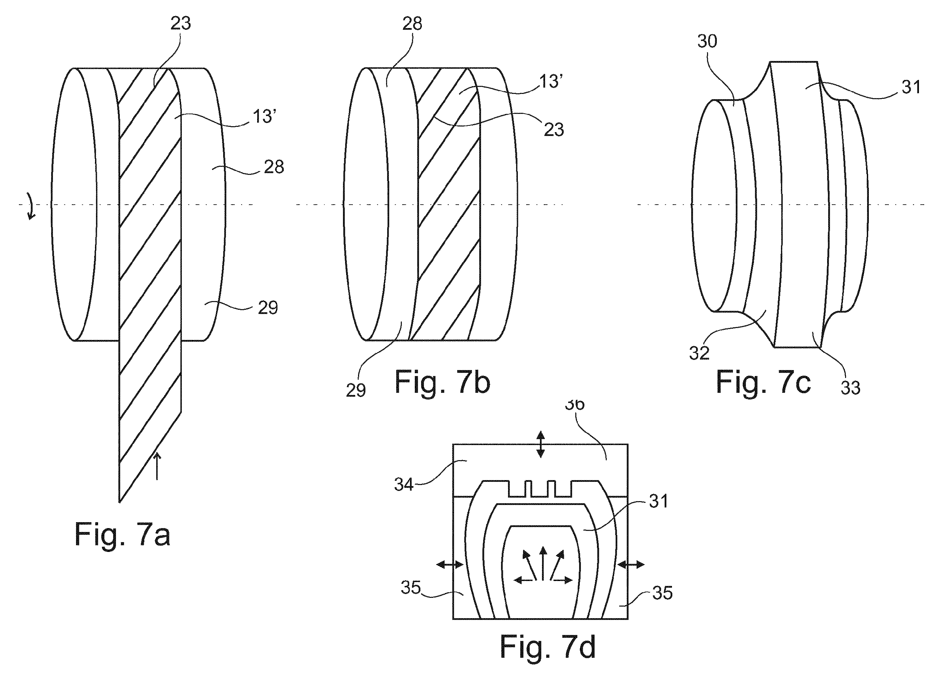

Die Figuren 7a bis 7d zeigen in schematischer Abfolge in den Figuren 7a und 7b die Herstellung von Gürtellagen auf einer Gürtelaufbautrommel 28, in Fig. 7c die Zusammenführung des fertig aufgebauten Gürtelpakets 33- bestehend aus den verschiedenen aufeinander aufgebauten Gürtellagen und dem Laufstreifen - mit dem unabhängig davon auf einer Karkassenaufbautrommel 30 hergestellten torusförmigen Karkasspaket 32 - bestehend aus den verschiedenen Karkasslagen, den Wulstkernen, der Reifeninnenschicht und den Seitenteilen - zu dem Reifenrohling 31 und in Fig. 7d der Ausformung und Ausvulkanisation in einer Reifenvulkanisationspresse 34.

Die Figuren 7a und 7b zeigen dabei beispielhaft an Hand der Gürtellage 23 die Herstellung der Gürtellagen im Gürtelpaket 33. Ein streifenförmig hergestelltes Gürtellagenaufbaumaterial 13'zur Herstellung der Arbeitslage 13 mit parallelen im Kautschuk eingebetteten Stahlkorden 23 wird hierzu in bekannter, herkömmlicher Weise kontinuierlich einer Gürtelaufbautrommel 28, welche in bekannter Weise mit einer radial äußeren zylindrischen oder konturierten Aufbauoberfläche 29 konzentrisch zur Drehachse der Gürtelaufbautrommel 28 ausgebildet ist, zugeführt. Die Gürtelaufbautrommel 28 wird dabei rotatorisch um ihre Drehachse angetrieben. Dabei wird das streifenförmige Gürtellagenaufbaumaterial 13' um die radial äußere Aufbauoberfläche 29 der Gürtelaufbautrommel 28 herumgezogen, bis es den Umfang der Aufbauoberfläche 29 vollständig umschließt. Dieser Zustand ist in Fig. 7b dargestellt. Im Anschluss daran wird - in nicht dargestellter Weise - ebenso ein streifenförmiges Gürtellagenaufbaumaterial 14' zur Herstellung der Gürtellage 14 mit den darin ausgebildeten parallelen Festigkeitsträgern 24 unter Verdrehung der Gürtelaufbautrommel 28 auf die bereits aufgebaute Gürtellage 13' aufgebaut. In analoger - nicht dargestellter -Weise wird im Anschluss daran um die in dieser Weise ausgebildete Gürtelaufaufbaulage 14' ein streifenförmig hergestelltes Gürtellagenaufbaumaterial 15' mit den darin im Kautschuk eingebetteten parallelen Festigkeitsträgern 25 zur Herstellung der Arbeitslage 15 aufgebaut. Im Anschluss daran wird in bekannter, nicht näher dargestellter Weise um die äußere Arbeitslage 15 zur Herstellung des Laufstreifens 10 ein streifenförmige Laufstreifenkautschukmaterial aufgebaut.

Die Festigkeitsträger 23 des streifenförmigen Gürtellagenaufbaumaterials 13' zum Aufbau der Arbeitslage 13 und die Festigkeitsträger 25 des streifenförmigen Gürtellagenaufbaumaterials 15' zum Aufbau der Arbeitslage 15 sind offene Stahlkorde bekannter Art, die bei Belastung auf Zug eine Bruchkraft F von F > 2500 N und bei 10% der Bruchkraft eine Dehnung D von D ≥ 0,2 % aufweisen. Offene Stahlkorde sind Stahlkorde, bei denen die Filamente des Stahlkords im Stahlkord keinen direkten Kontakt zueinander aufweisen. Derartige Stahlkorde sind beispielsweise bekannte offene Stahlkorde des Typs 3+8x0,35LL 9/18mm mit einer Bruchkraft F = 3100N und mit einer Dehnung D von D = 0,24 % bei 10% der Bruchkraft.

In nicht dargestellter bekannter Weise wird auf einer Karkassenaufbautrommel 30 bekannter Art ein Karkasspaket 32 in herkömmlicher Weise hergestellt. Hierzu werden beispielsweise auf der radial äußeren Oberflächen der Karkassenaufbautrommel 30 zunächst das streifenförmige Kautschukmaterial zur Herstellung der luftdichten Innenschicht des Reifens, im Anschluss daran die Karkasslagen und auf den Karkasslagen die Wulstkerne mit Apex aufgebaut. Im Anschluss daran wird zur Erzeugung der torusförmigen Form die Wulstkerne in axialer Richtung der Karkassaufbautrommel 30 aufeinander zubewegt und die aus Karkasslagen und Innenschicht ausgebildeten Lagen zwischen den Wulstkernen radial expandiert, wobei die axial außerhalb der Wulstkerne ausgebildeten Karkasslagenabschnitte zur Bildung von Karkassenumschlägen auf der Außenseite entlang des Wulstkernes und des Apex hochgeschlagen werden. Zusätzlich werden die die Reifenseitenwände bildenden Gummiaufbaustreifen auf die Karkasslagen aufgebracht. Das in dieser bekannten Weise ausgebildete Karkasspaket 32 wird mit dem auf der Gürtelaufbautrommel 28 ausgebildeten Gürtelpaket 33 in bekannter, herkömmlicher Weise zu einem Reifenrohling 31 verbunden. Hierzu wird das Gürtelaufpaket 33 in bekannter Weise konzentrisch zum Karkasspaket 32 auf das Karkasspaket 32 aufgeschoben und mit diesem verbunden. Dieser Zustand ist in Figur 7c dargestellt.

Der in dieser Weise fertiggestellte Reifenrohling 31 wird in bekannter Weise dann in einer Reifenvulkanisierpresse 34 ausgeformt und ausvulkanisiert. Hierzu wird der Reifenrohling 31 in der aus den beiden die Reifenseitenteile ausformenden Seitenschalen 35 und den von radial außen einwirkenden Laufstreifenformsegmenten 36 ausgebildete Reifenvulkanisierpresse 34 eingesetzt. Die Seitenschalen 35 werden in ihre Sollposition zur Ausformung der Reifenseitenwand axial verschoben und die radial von außen einwirkenden Laufstreifenformsegmente 36 werden in radialer Richtung des Reifenrohlings 31 in ihre Sollposition zur Ausformung des Laufstreifenprofils verschoben. Der Reifenrohling 31 wird, dann in bekannter, herkömmlicher Weise von innen mit Hilfe von Heißdampf und ggfs. mit Hilfe eines Heizbalges in radialer Richtung des Reifenrohlings noch geringfügig unter Durchführung der Resterhebung erhoben und dabei zur Ausformung des Laufstreifenprofils in die Laufstreifenformsegmente 36 gepresst. Bei dieser Resterhebung und unter Einwirkung von Wärme und Druck werden die Stahlkorde 23 der Arbeitslagen 13' und die Stahlkorde 25 der Arbeitslagen 15' gedehnt und dabei in ihrem Kordaufbau geschlossen und verändern dabei ihren Kordtypus. Der Reifenrohling 31 wird dabei unter Einwirkung des Druckes und der Temperatur zum Fahrzeugluftreifen ausvulkanisiert. Die Stahlkorde 23 und 25 sind nach der Veränderung in ihrem Aufbau geschlossen und weisen bei Belastung auf Zug eine Bruchkraft F mit F =3100N und bei 10% der Bruchkraft eine Dehnung D von D ≤ 0,2 %, beispielsweise D=0,18% gemessen im Reifen auf. Ein geschlossener Stahlkord ist ein Stahlkord bei dem die äußeren und inneren Filamente punktuellen oder lienearen Kontakt zueinander aufweisen.

In einer anderen nicht dargestellten alternativen Ausbildung sind die Stahlkorde 23 bzw. 25, die in den Aufbaulagen 13' bzw. 15' verwendet werden, bekannte in ihrer Schlaglänge veränderbare Stahlkorde mit einer durch Zug veränderbaren Verdrillung mit einer ersten Schlaglänge. Die erste Schlaglänge der Stahlkorde ist mit maximal 10mm ausgebildet.

Während der Resterhebung und Vulkanisation in der Vulkanisationspresse wird aufgrund der einwirkenden Zugkräfte die Schlaglänge dieser Stahlkorde erhöht und weisen anschließend eine zweite gegenüber der ersten Schlaglänge erhöhte Schlaglänge auf.

Die Werte sind mit der BISFA E6 Standard-Testmethode für Stahlkorde ermittelt.

Die Festigkeitsträger 24 sind in einer Ausführung Stahlkorde bekannter Art. In einer anderen Ausführung sind die Festigkeitsträger 24 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

In einem Ausführungsbeispiel ist β = 1°, α = 20°, γ = 20°, d = 11 mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel γ der Festigkeitsträger 25 der äußeren Arbeitslage 15.

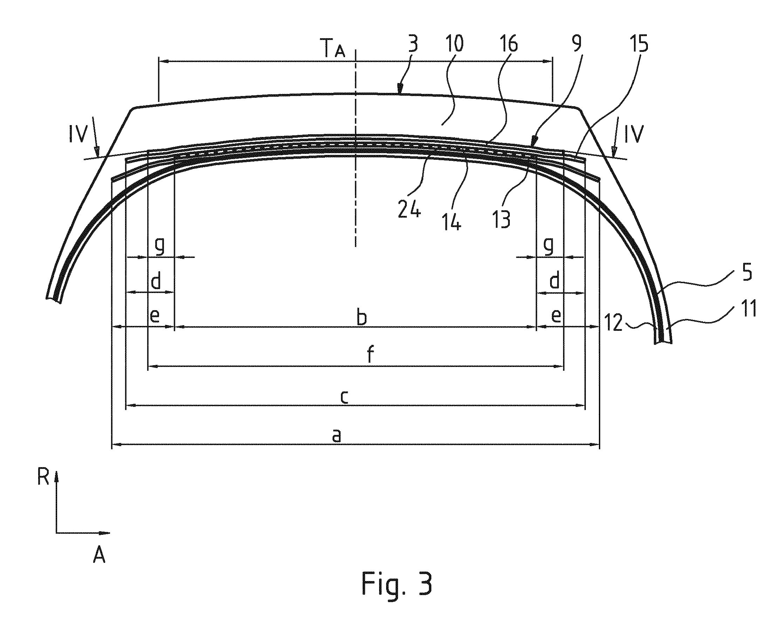

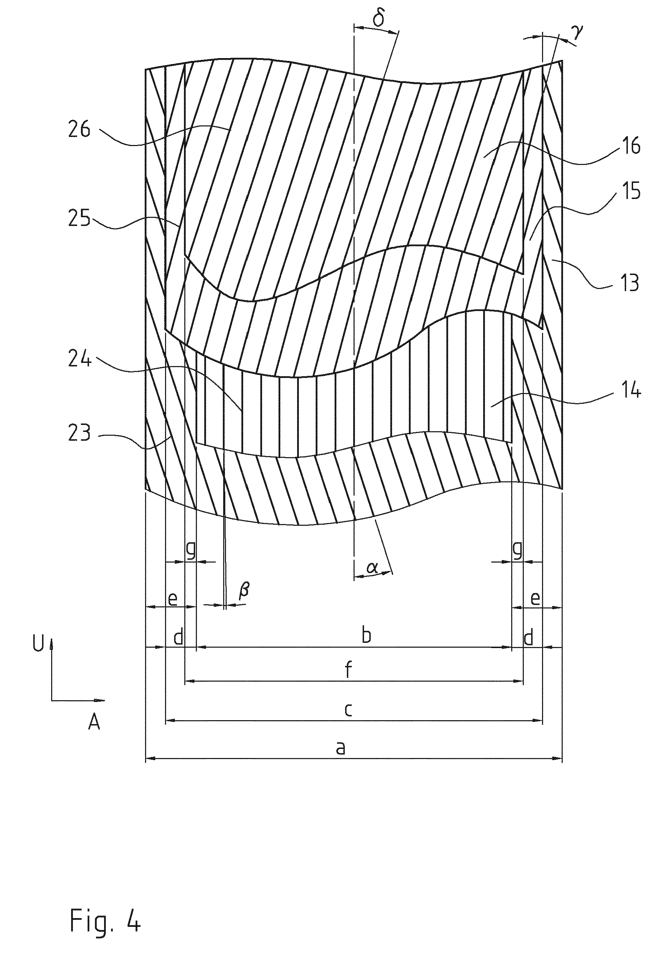

Fig.3 und Fig.4 zeigen eine weitere alternative Ausführung des Fahrzeugluftreifens, bei der der Gürtel 9 zusätzlich zu den in den Fig.1 und Fig.2 dargestellten Gürtellagen 13, 14 und 15 auf der radialen Außenseite der äußeren Arbeitslage 15 mit einer zusätzlichen Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 15°≤δ≤45°. Die Gürtellage 16 erstreckt sich über ihre gesamte axiale Erstreckung in unmittelbarem Berührkontakt zur Arbeitslage 15 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand g vom Gürtellagenrand der 0°-Lage 14 mit g < d. Die Breite f ist das Maß der axialen Erstreckung der zusätzliche Gürtellage 16 mit b < f < c < a.

Die Festigkeitsträger 26 der Gürtellage 16 sind in einem Ausführungsbeispiel mit gleicher Neigungsrichtung ausgebildet wie die Festigkeitsträger 25 der Arbeitslage 15.

Die Festigkeitsträger 26 sind Stahlkorde bekannter Art.

In einer anderen nicht dargestellten Ausführung ist die zusätzliche Gürtellage 16 als 0°-Lage ausgebildet und der Neigungswinkel δ ihrer über den gesamten Umfang des Fahrzeugluftreifens erstreckten Festigkeitsträger 26 mit 0° ≤ δ ≤ 5°. Bei Ausbildung der zusätzlichen Arbeitslage 16 als 0°-Lage sind die Festigkeitsträger 26 in einer Ausführung Stahlkorde bekannter Art. In einer anderen Ausführung sind die Festigkeitsträger 26 der als 0°-Lage ausgebildeten Arbeitslage 16 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

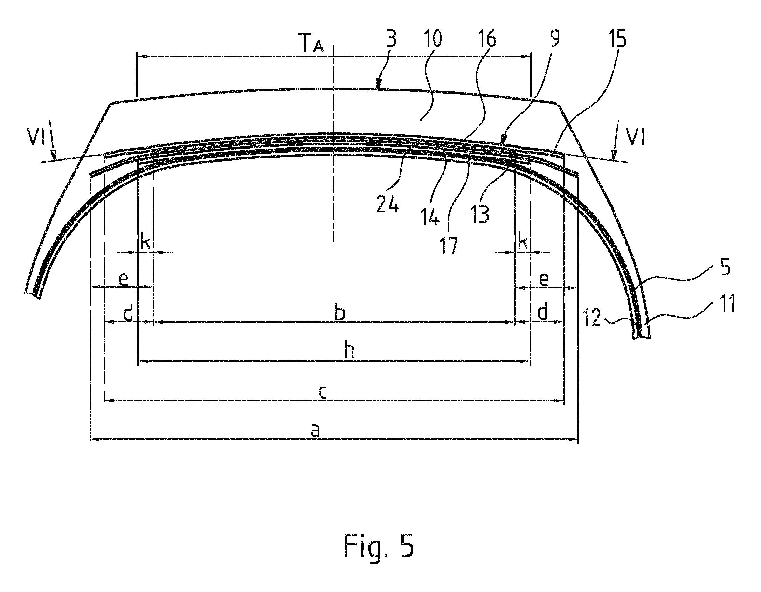

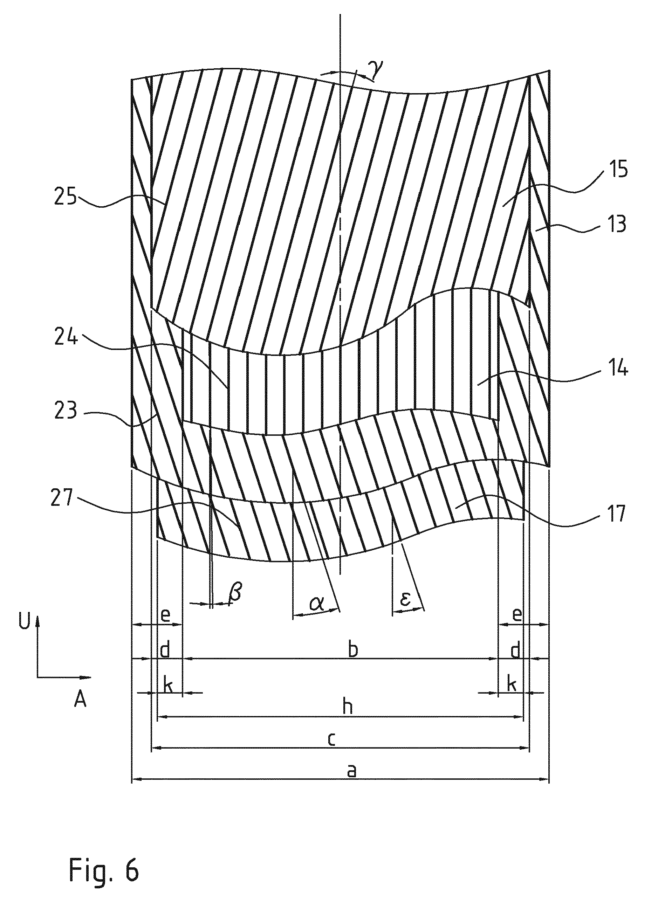

Fig.5 und Fig.6 zeigen ein weiteres alternatives Ausführungsbeispiel des Fahrzeugluftreifens, bei dem anders als in bei den in Fig.1 und Fig.2 dargestellten und erläuterten Ausführungsbeispielen der Gürtel 9 zusätzlich mit einer in radialer Position zwischen radial innere Arbeitslage 13 und Karkasse 5 angeordneten Gürtellage 17 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 45° ≤ ε ≤ 90°, beispielsweise mit ε = 50°. Die Gürtellage 17 erstreckt sich über ihre gesamte axiale Erstreckung in unmittelbarem Berührkontakt zur Arbeitslage 13 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand k vom Gürtellagenrand der 0°-Lage 14 mit k < d < e. Die Breite h ist das Maß der axialen Erstreckung der zusätzliche Gürtellage 17 mit b < h < c < a.

Die Festigkeitsträger 27 der Gürtellage 17 sind in einem Ausführungsbeispiel mit gleicher Neigungsrichtung ausgebildet wie die Festigkeitsträger 23 der radial inneren Arbeitslage 13.

Die Festigkeitsträger 27 sind Stahlkorde bekannter Art.

In weiteren alternativen, nicht dargestellten Ausführungen ist bei den im Zusammenhang mit den Fig.3 und Fig.4 dargestellten Ausführungen mit zusätzlicher Gürtellage 16 auch die im Zusammenhang mit den Fig.5 und Fig.6 dargestellte zusätzliche innere Gürtellage 17 ausgebildet. In diesem Fall ist der Gürtel 9 aus einer 5-Lagenanordnung mit den von radial innen nach radial außen übereinander angeordneten Gürtellagen 17, 13, 14, 15 und 16 ausgebildet.

### Bezugszeichenliste

### (Teil der Beschreibung)

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger
- 28: Aufbautrommel
- 29: Aufbaufläche
- 30: Aufbautrommel
- 31: Rohling
- 32: Karkasspaket
- 33: Gürtelpaket
- 34: Vulkanisationspresse
- 35: Seitenteil
- 36: Laufstreifenprofilierungssegment

## Patentansprüche

1. Verfahren zur Herstellung eines Fahrzeugluftreifens mit einem Gürtel (9), bei dem mindestens eine Gürtellage (13,15) aus parallelen in Kautschuk eingebetteten Stahlkorden (23,25) ausgebildet wird, wobei die Gürtellage zur Herstellung des Reifenrohlings (31) auf einer Aufbautrommel (28) aufgebaut wird, wobei nach Fertigstellung des Reifenrohlings (31) der Reifenrohling (31) in einer Vulkanisationspresse (34) ausgeformt und vulkanisiert wird,
**dadurch gekennzeichnet,**
**dass** auf die Aufbautrommel (28) zum Aufbau des Gürtels (9) eine Gürtellage (13,15) aus parallelen in Kautschuk eingebetteten dehnbaren Stahlkorden (23,25) aufgelegt wird, und
**dass** nach Fertigstellung des Reifenrohlings (31) beim Ausformen und Vulkanisieren des Reifenrohlings (31) in einer Vulkanisationspresse (34) die Stahlkorde (23,25) in ihrer Dehnbarkeit zu weniger dehnbaren Stahlkorden (23,25) - insbesondere zu undehnbaren Stahlkorden (23,25) mit einer Dehnung D von D ≤ 0,2 % bei 10% der Bruchkraft - verändert werden.

2. Verfahren zur Herstellung eines Fahrzeugluftreifens gemäß den Merkmalen von Anspruch 1,
wobei auf die Aufbautrommel (28) zum Aufbau des Gürtels (9) eine Gürtellage (13,15) aus parallelen in Kautschuk eingebetteten offenen Stahlkorden (23,25) aufgelegt wird.

3. Verfahren zur Herstellung eines Fahrzeugluftreifens gemäß den Merkmalen von Anspruch 2,
wobei nach Fertigstellung des Reifenrohlings (31) beim Ausformen und Vulkanisieren des Reifenrohlings (31) in einer Vulkanisationspresse (34) die Stahlkorde (23,25) weiter geschlossen werden und insbesondere zu geschlossenen Stahlkorden (23,25) verändert werden.

4. Verfahren zur Herstellung eines Fahrzeugluftreifens gemäß den Merkmalen von einem oder mehreren der vorangegangenen Ansprüche,
wobei auf die Aufbautrommel (28) zum Aufbau des Gürtels (9) eine Gürtellage (13,15) aus parallelen in Kautschuk eingebetteten Stahlkorden (23,25) mit einer durch Zugkräfte veränderbaren Verdrillung mit einer maximalen Schlaglänge der Stahlkorde (23,25) von 10mm aufgelegt wird.

5. Verfahren zur Herstellung eines Fahrzeugluftreifens gemäß den Merkmalen von Anspruch 4,
wobei nach Fertigstellung des Reifenrohlings (31) beim Ausformen und Vulkanisieren des Reifenrohlings (31) in einer Vulkanisationspresse (34) die Stahlkorde (23,25) in ihrer Schlaglänge erhöht werden.

6. Verfahren zur Herstellung eines Fahrzeugluftreifens für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus mehreren von radial innen nach radial außen auf einander liegend angeordneten Gürtellagen (13,14,15) ausgebildet ist, von denen wenigstens zwei Gürtellagen (13,15) als Arbeitslagen ausgebildet sind, wobei die radial innere (13) und die radial äußere (15) der beiden Arbeitslagen Gürtellagen mit in Gummi eingebetteten parallelen Festigkeitsträgern (23,25) aus Stahl sind, wobei die Festigkeitsträger (23) der radial inneren Arbeitslage (13) in ihrer Ausrichtung einen Winkel α zur Umfangsrichtung U mit 10°≤α≤24°und die Festigkeitsträger (25) der radial äußeren Arbeitslage (15) einen Winkel γ zur Umfangsrichtung U mit 10°≤γ≤24°einschließen, wobei in Umfangsrichtung U des Fahrzeugreifens gesehen die Festigkeitsträger (23) der einen Arbeitslage (13) eine entgegengesetzte axiale Neigungsrichtung zu den Festigkeitsträgern (25) der anderen Arbeitslage (15) aufweisen,
gemäß den Merkmalen von einem oder mehreren der vorangegangenen Ansprüche, wobei wenigstens eine - insbesondere beide - Arbeitslagen (13,15) auf die Aufbautrommel (28) zum Aufbau des Gürtels (9) aus parallelen in Kautschuk eingebetteten dehnbaren Stahlkorden (23,25) aufgelegt wird, und
wobei nach Fertigstellung des Reifenrohlings (31) beim Ausformen und Vulkanisieren des Reifenrohlings (31) in einer Vulkanisationspresse (34) die Stahlkorde (23,25) der Arbeitslage(n) (13,15) in ihrer Dehnbarkeit zu weniger dehnbaren Stahlkorden (23,25) - insbesondere zu undehnbaren Stahlkorden (23,25) mit einer Dehnung D von D ≤ 0,2 % bei 10% der Bruchkraft - verändert werden.

7. Verfahren zur Herstellung eines Fahrzeugluftreifens gemäß den Merkmalen von Anspruch 6,
wobei zwischen den beiden Arbeitslagen (13,15) eine Nullgradlage (14) aufgebaut wird.

## Claims

1. Method for producing a pneumatic vehicle tire with a belt (9), wherein at least one belt ply (13, 15) is formed by parallel steel cords (23, 25) embedded in rubber, wherein the belt ply is built up on a building drum (28) in order to produce the green tire (31), wherein, after the completion of the green tire (31), the green tire (31) undergoes final shaping and vulcanization in a vulcanizing press (34),
**characterized**
**in that** a belt ply (13, 15) consisting of parallel elastic steel cords (23, 25) embedded in rubber is laid on the building drum (28) in order to build up the belt (9), and
**in that**, after the completion of the green tire (31), the elasticity of the steel cords (23, 25) is modified to produce less elastic steel cords (23, 25) - in particular inelastic steel cords (23, 25) having an elongation D of D ≤ 0.2% at 10% of the breaking load - during the final shaping and vulcanizing of the green tire (31) in a vulcanizing press (34).

2. Method for producing a pneumatic vehicle tire in accordance with the features of Claim 1,
wherein a belt ply (13, 15) consisting of parallel open steel cords (23, 25) embedded in rubber is laid on the building drum (28) in order to build up the belt (9).

3. Method for producing a pneumatic vehicle tire in accordance with the features of Claim 2,
wherein, after the completion of the green tire (31), the steel cords (23, 25) are closed further and are in particular modified to produce closed steel cords (23, 25) during the final shaping and vulcanizing of the green tire (31) in a vulcanizing press (34).

4. Method for producing a pneumatic vehicle tire in accordance with the features of one or more of the preceding claims,
wherein a belt ply (13, 15) consisting of parallel steel cords (23, 25) embedded in rubber with a twist that can be modified by means of tensile forces and with a maximum length of lay of the steel cords (23, 25) of 10 mm is laid on the building drum (28) in order to build up the belt (9).

5. Method for producing a pneumatic vehicle tire in accordance with the features of Claim 4,
wherein, after the completion of the green tire (31), the length of lay of the steel cords (23, 25) is increased during the final shaping and vulcanizing of the green tire (31) in a vulcanizing press (34).

6. Method for producing a pneumatic vehicle tire for commercial vehicles, having a carcass (5), having a belt (9) built up radially to the outside of the carcass (5), and having a profiled tread (10) built up on the belt (9) radially to the outside of the belt (9), wherein the belt (9) is formed by a plurality of belt plies (13, 14, 15) which are arranged one on top of the other radially from the inside to the outside and of which at least two belt plies (13, 15) are designed as working plies, wherein the radially inner ply (13) and the radially outer ply (15) of the two working plies are belt plies comprising parallel steel reinforcements (23, 25) embedded in rubber, wherein the reinforcements (23) of the radially inner working ply (13) are aligned so as to enclose an angle α of 10° ≤ α ≤ 24° with the circumferential direction U, and the reinforcements (25) of the radially outer working ply (15) are aligned so as to enclose an angle γ of 10° ≤ γ ≤ 24° with the circumferential direction U, wherein the reinforcements (23) of one working ply (13) have an opposite axial direction of inclination to the reinforcements (25) of the other working ply (15), when viewed in the circumferential direction U of the vehicle tire, in accordance with the features of one or more of the preceding claims, wherein at least one - in particular both - working plies (13, 15) are laid on the building drum (28) in order to build up the belt (9) consisting of parallel elastic steel cords (23, 25) embedded in rubber, and wherein, after the completion of the green tire (31), the elasticity of the steel cords (23, 25) of the working ply (plies) (13, 15) is modified to produce less elastic steel cords (23, 25) having an elongation D of D ≤ 0.2% at 10% of the breaking load - in particular inelastic steel cords (23, 25) - during the final shaping and vulcanizing of the green tire (31) in a vulcanizing press (34).

7. Method for producing a pneumatic vehicle tire in accordance with the features of Claim 6,
wherein a zero degree ply (14) is built up between the two working plies (13, 15).

## Revendications

1. Procédé de fabrication de pneumatique de véhicule comportant une ceinture (9), dans lequel au moins une couche de ceinture (13,15) constituée de câbles d'acier (23,25) incorporés dans du caoutchouc est réalisée, dans lequel la couche de ceinture pour fabriquer l'ébauche de pneumatique (31) est assemblée sur un tambour d'assemblage (28), dans lequel après la finition de l'ébauche de pneumatique (31), l'ébauche de pneumatique (31) est façonnée et vulcanisée dans une presse de vulcanisation (34),
**caractérisé en ce que** sur le tambour d'assemblage (28) pour assembler la ceinture (9) une couche de ceinture (13,15) constituée de câbles d'acier (23,25) parallèles extensibles incorporés dans du caoutchouc est posée, et **en ce qu'**après la finition de l'ébauche de pneumatique (31) lors du façonnage et de la vulcanisation de l'ébauche de pneumatique (31) dans une presse de vulcanisation (34), les câbles d'acier (23,25) sont modifiés dans leur extensibilité en câbles d'acier moins extensibles (23,25), notamment en câbles d'acier non extensibles (23,25) avec une extension D de D ≤ 0,2% à 10% de la force de rupture.

2. Procédé de fabrication d'un pneumatique de véhicule selon les caractéristiques de la revendication 1, dans lequel sur le tambour d'assemblage (28) pour assembler la ceinture (9) une couche de ceinture (13,15) constituée de câbles d'acier (23,25) parallèles ouverts incorporés dans du caoutchouc est posée.

3. Procédé de fabrication d'un pneumatique de véhicule selon les caractéristiques de la revendication 2, dans lequel après la finition de l'ébauche de pneumatique (31) lors du façonnage et de la vulcanisation de l'ébauche de pneumatique (31) dans une presse de vulcanisation (34) les câbles d'acier (23,25) sont en outre fermés et sont notamment modifiés en câbles d'acier fermés (23,25).

4. Procédé de fabrication d'un pneumatique véhicule selon les caractéristiques d'une ou plusieurs des revendications précédentes, dans lequel sur le tambour d'assemblage (28) pour assembler la ceinture (9) une couche de ceinture (13,15) constituée de câbles d'acier (23,25) parallèles incorporés dans du caoutchouc est posée avec une torsade modifiable par les forces de traction avec une longueur de pas maximale des câbles d'acier (23,25) de 10 mm.

5. Procédé de fabrication d'un pneumatique de véhicule selon les caractéristiques de la revendication 4, dans lequel après la finition de l'ébauche de pneumatique (31) lors du façonnage et de la vulcanisation de l'ébauche de pneumatique (31) dans une presse de vulcanisation (34) les câbles d'acier (23,25) sont augmentés dans leur longueur de pas.

6. Procédé de fabrication d'un pneumatique de véhicule pour véhicules utilitaires avec une carcasse (5), comportant une ceinture (9) assemblée radialement à l'extérieur de la carcasse (5) et comportant une bande de roulement (10) profilée assemblée radialement à l'extérieur de la ceinture (9) sur la ceinture (9), dans lequel la ceinture (9) est constituée de plusieurs couches de ceinture (13,14,15) disposées les unes sur les autres radialement à l'intérieur vers radialement à l'extérieur, parmi lesquelles au moins deux couches de ceinture (13,15) sont conçues comme des couches de travail, dans lequel la couche de ceinture radiale intérieure (13) et la couche de ceinture radiale extérieure (15) des deux couches de ceinture sont en acier avec des supports de rigidité (23,25) parallèles incorporés dans du caoutchouc, dans lequel les supports de rigidité (23) de la couche de travail radiale intérieure (13) définissent dans leur alignement un angle α par rapport à la direction circonférentielle U avec 10°≤α≤24° et les supports de rigidité (25) de la couche de travail radiale extérieure (15) définissent dans leur alignement un angle γ par rapport à la direction circonférentielle U avec 10°≤γ≤24°, dans lequel, vu dans la direction circonférentielle U du pneumatique de véhicule, les supports de rigidité (23) d'une des couches de travail (13) présentent une direction d'inclinaison axiale opposée par rapport aux supports de rigidité (25) de l'autre couche de travail (15), selon les caractéristiques d'une ou plusieurs des revendications précédentes, dans lequel au moins une - notamment les deux- couches de travail (13,15) est posée sur le tambour d'assemblage (28) pour assembler la ceinture (9) constituée de câbles d'acier (23,25) parallèles extensibles incorporés dans du caoutchouc, et dans lequel après la finition de l'ébauche de pneumatique (31) lors du façonnage et de la vulcanisation de l'ébauche de pneumatique (31) dans une presse de vulcanisation (34), les câbles d'acier (23,25) de la/des couche(s) de travail (13,15) sont modifiés dans leur extensibilité en câbles d'acier moins extensibles (23,25), notamment en câbles d'acier non extensibles (23,25) avec une extension D de D ≤ 0,2% à 10% de la force de rupture.

7. Procédé de fabrication d'un pneumatique de véhicule selon les caractéristiques de la revendication 6, dans lequel entre les deux couches de travail (13,15) une couches de degré zéro (14) est assemblée.
